# EUROPÄISCHE PATENTANMELDUNG

(11) **EP 0 810 375 A2**
(43) Veröffentlichungstag der Anmeldung: **03.12.1997**
(21) Anmeldenummer: 97108172.4
(22) Anmeldetag: 20.05.1997
(51) Int. Cl.: F15B 13/00

(54) **Servoventil**

(30) Priorität: 31.05.1996 DE 19623272
(71) Anmelder: SIEMENS AKTIENGESELLSCHAFT, 80333 München (DE)
(72) Erfinder: Nusche, Georg, 13629 Berlin (DE)

(57) **Zusammenfassung**

Die Erfindung bezieht sich auf ein Servoventil mit einem Gehäuse mit einer Zuluft-, einer Entlüftungs- und einer Arbeitsöffnung sowie mit einem Ventilorgan, das durch einen elektromagnetischen Antrieb abwechselnd in eine die Zuluft- oder die Entlüftungsöffnung verschließende Lage bringbar ist.

Um ein Servoventil mit einem vergleichsweise einfachen mechanischen Aufbau zu erzielen, liegen die Zuluft- (2) und die Entlüftungsöffnung (3) im Gehäuse (1) einander gegenüber. Das Ventilorgan ist als Ventilzunge (5) ausgebildet, die an ihrem einen Ende (6) gehalten und mit ihrem anderen Ende (7) zwischen der die Zuluft- (2) und die Entlüftungsöffnung (3) verschließenden Lage hin und her bewegbar ist. An dem anderen Ende (7) der Ventilzunge (5) greift eine Betätigungsstange (11) an, die durch die Entlüftungsöffnung (3) zu dem elektromagnetischen Antrieb (14) geführt ist.

## Beschreibung

Die Erfindung bezieht sich auf ein Servoventil mit einem Gehäuse mit einer Zuluft-, einer Entlüftungs- und einer Arbeitsöffnung sowie mit einem Ventilorgan, das durch einen elektromagnetischen Antrieb abwechselnd in eine die Zuluft- oder die Entlüftungsöffnung verschließende Lage bringbar ist.

Bei einem bekannten Servoventil dieser Art (Gerhard Kriechbaum: 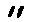 Pneumatische Steuerung", Viehwegs Fachbücher der Technik, 1976, Seiten 46 bis 71, insbesondere Seite 62) besteht das Ventilorgan aus einem zylindrischen Verschlußelement, das axial bewegbar ist und mit einem Bereich seiner Umfangsfläche in zwei unterschiedlichen Stellungen einmal eine Zuluftöffnung und ein anderes Mal eine Entlüftungsöffnung verschließt. Die Zuluft- und die Entlüftungsöffnung liegen einander nicht gegenüber; äußere Anschlußöffnungen des bekannten Servoventils liegen einander gegenüber und sind über umgelenkte, innere Kanäle mit der Zuluft- bzw. der Entlüftungsöffnung verbunden. Das zylindrische Verschlußelement weist einen durch ein Steuerelement bewegbaren Betätigungsfortsatz auf, welcher durch eine zusätzliche Öffnung aus dem Ventil herausgeführt ist. Diese zusätzliche Öffnung muß entsprechend abgedichtet sein. Aus der genannten Literaturstelle ergibt sich ohne weiteres, daß der Betätigungsfortsatz Bestandteil eines elektromagnetischen Antriebs sein kann.

Aus der DE 42 33 299 C1 ist ein elektropneumatischer Stellungsregler mit zwei Servoventilen bekannt. Die Servoventile sind jeweils mit einem Gehäuse mit einer Zuluft-, einer Entlüftungs- und einer Arbeitsöffnung versehen, wobei die Zuluft- und die Entlüftungsöffnung im Gehäuse einander gegenüberliegen. Weiterhin ist ein Ventilorgan vorhanden, das als Ventilzunge ausgebildet ist, die an ihrem einen Ende gehalten ist. Die Ventilzunge dient gleichzeitig als Klappanker eines elektromagnetischen Antriebs und wird im stromlosen Zustand des elektromagnetischen Antriebs durch eine Feder in einer die Zuluftöffnung verschließenden Lage gehalten. Wird dagegen ein Strom eingespeist, so zieht der elektromagnetische Antrieb die Ventilzunge entgegen der Federkraft in eine Lage, in welcher die Entlüftungsöffnung verschlossen wird. Sowohl zum Umschalten von der die Zuluftöffnung verschließenden Lage in die die Entlüftungsöffnung verschließende Lage der Ventilzunge als auch zum Halten der Ventilzunge in der die Entlüftungsöffnung verschließenden Lage ist somit ein Strom im elektromagnetischen Antrieb erforderlich.

Der Erfindung liegt die Aufgabe zugrunde, ein Servoventil mit einem vergleichsweise einfachen mechanischen Aufbau vorzuschlagen, bei welchem der elektromagnetische Antrieb nur beim Umschalten einen Schaltstrom erfordert.

Zur Lösung dieser Aufgabe ist ein Servoventil der eingangs angegebenen Art erfindungsgemäß derart ausgeführt, daß die Zuluft- und die Entlüftungsöffnung im Gehäuse einander gegenüberliegen, das Ventilorgan als Ventilzunge ausgebildet ist, die an ihrem einen Ende gehalten ist und mit ihrem anderen Ende zwischen der die Zuluft- und die Entlüftungsöffnung verschließenden Lage hin- und herbewegbar ist, an dem anderen Ende der Ventilzunge eine Betätigungsstange angreift, die durch die Entlüftungsöffnung zu dem elektromagnetischen Antrieb geführt ist und der elektromagnetische Antrieb eine Halteeinrichtung aufweist, mittels der die Betätigungsstange sowohl in der die Entlüftungsöffnung verschließenden Lage der Ventilzunge als auch in der die Zuluftöffnung verschließenden Lage der Ventilzunge arretierbar ist.

Der wesentliche Vorteil des erfindungsgemäßen Servoventils besteht in seinem einfachen Aufbau. Das Ventilorgan ist nämlich als eine einfach herzustellende Ventilzunge ausgebildet, die mit ihrer Flachseite die jeweilige Abdichtung bewirkt. Außerdem ist keine Dichtung für die Betätigungsstange notwendig, weil diese durch die Entlüftungsöffnung aus dem Ventil geführt ist. Hinzu kommt, daß sich die Zuluft- und die Entlüftungsöffnung gegenüberliegen, so daß keine Umlenkkanäle im Ventilgehäuse nötig sind.

Die Betätigungsstange der Ventilzunge kann durch einen beliebigen elektromagnetischen Antrieb ausgelenkt werden; vorteilhaft ist dabei, daß der elektromagnetische Antrieb eine Halteeinrichtung aufweist, mittels der die Betätigungsstange sowohl in der die Entlüftungsöffnung verschließenden Lage der Ventilzunge als auch in der die Zuluftöffnung verschließenden Lage der Ventilzunge arretierbar ist. Hierbei erfordert der elektromagnetische Antrieb nur beim Umschalten des Servoventils einen elektrischen Schaltstrom, während für das Halten der Ventilzunge in einer verschließenden Lage kein Strom erforderlich ist.

Die Halteeinrichtung kann mechanisch, beispielsweise durch einen Rastmechanismus, ausgeführt sein; als besonders vorteilhaft wird es jedoch aus Gründen einer einfachen Konstruktion angesehen, wenn die Halteeinrichtung des elektromagnetischen Antriebs einen Dauermagneten aufweist, der mit dem Betätigungsorgan des elektromagnetischen Antriebs zusammenwirkt. Eine zu dieser Ausführung des erfindungsgemäßen Servoventils gleichwertige Ausführung der Halteeinrichtung ist gegeben, wenn die Halteeinrichtung aus einem magnetisierbaren Material besteht und das Betätigungsorgan des elektromagnetischen Antriebs einen Dauermagneten aufweist.

Das erfindungsgemäße Servoventil kann zur Ansteuerung eines Hauptventils verwendet werden, wenn gemäß einer Weiterbildung der Erfindung zwei Servoventile ein Steuerventil für ein Hauptventil bilden, das über die Zuluftöffnung des einen Servoventils Zuluft erhält und über die Entlüftungsöffnung des anderen Servoventils entlüftet wird, wozu die Betätigungsstangen der zwei Servoventile derart gesteuert sind, daß gleichzeitig entweder die Zuluftöffnung des einen Servoventils oder die Entlüftungsöffnung des anderen Servoventils geöffnet ist.

Ein wesentlicher Vorteil eines solchen Steuerventils besteht darin, daß zu keinem Zeitpunkt Zuluft- und Entlüftungsöffnung gleichzeitig geöffnet sind. Außerdem läßt sich dieses Steuerventil unter Erzielung einer Großserie aus einzelnen Servoventilen zusammensetzen.

Ein Steuerventil kann unter Erzielung der oben angegebenen Vorteile auch aus Servoventilen mit einem an der Betätigungsstange befestigten Ventildeckel als Ventilorgan gebildet werden; in diesem Fall ist eine zusätzliche mechanische Führungseinrichtung für die Betätigungsstange nötig, die beispielsweise in der Entlüftungsöffnung des Servoventils angebracht sein kann.

Besonders einfach ist die Ausführung des Steuerventils, wenn die Betätigungsstangen über eine mechanische Verriegelungseinrichtung miteinander verbunden sind, durch die bei die Zuluftöffnung des einen Servoventils freigebender Lage der Betätigungsstange dieses Servoventils die Betätigungsstange des anderen Servoventils in der die Entlüftungsöffnung dieses Ventils verschließenden Lage der Ventilzunge arretiert ist und durch die bei die Entlüftungsöffnung des anderen Servoventils freigebender Lage der Betätigungsstange dieses Servoventils die Betätigungsstange des einen Servoventils in der die Zuluftöffnung dieses Ventils verschließenden Lage der Ventilzunge arretiert ist.

Der Vorteil dieser Verriegelung besteht in dem nur geringen Herstellungsaufwand. Außerdem kann ein vorhandenes Steuerventil durch einfaches Entfernen der mechanischen Verriegelung wieder in zwei voneinander unabhängige Servoventile aufgetrennt werden.

Statt einer mechanischen Kontrolle der Ansteuerung der Betätigungsstangen ist auch eine elektrische Überwachung der Steuerung des Steuerventils möglich, wobei es als vorteilhaft angesehen wird, wenn die elektromagnetischen Antriebe der zwei Servoventile an eine elektrische Schaltung angeschlossen sind, die elektrische Schaltung derart ausgebildet ist, daß sie nach Einschalten der Stromversorgung die elektromagnetischen Antriebe zu einer derartigen Einstellung der Betätigungsstangen veranlaßt, daß die Zuluftöffnung des einen Servoventils geschlossen und gleichzeitig die Entlüftungsöffnung des anderen Servoventils geöffnet ist und daß sie bei nachfolgender äußeren Betätigung die elektromagnetischen Antriebe zu einer derartigen Einstellung der Betätigungsstangen veranlaßt, daß gleichzeitig entweder die Zuluftöffnung des einen Servoventils oder die Entlüftungsöffnung des anderen Servoventils geöffnet ist.

In Abweichung davon können die Betätigungsstangen auch andere Ausgangsposition nach dem Einschalten der Stromversorgung annehmen, sofern nicht gleichzeitig die Zuluftöffnung des einen Servoventils und die Entlüftungsöffnung des anderen Servoventils offenstehen.

Der besondere Vorteil der elektrischen Überwachung der Steuerung des Steuerventils besteht darin, daß die beiden Servoventile konstruktiv nicht ergänzt werden müssen.

Zur Erläuterung der Erfindung ist in
Fig 1 ein Ausführungsbeispiel des erfindungsgemäßen Servoventils schematisch, in
Fig 2 ein Ausführungsbeispiel eines aus zwei Servoventilen bestehenden Steuerventils mit mechanischer Verriegelung schematisch und in
Fig 3 ein weiteres Ausführungsbeispiel eines Steuerventils mit elektrischer Verriegelung in schematischer Darstellung wiedergegeben.

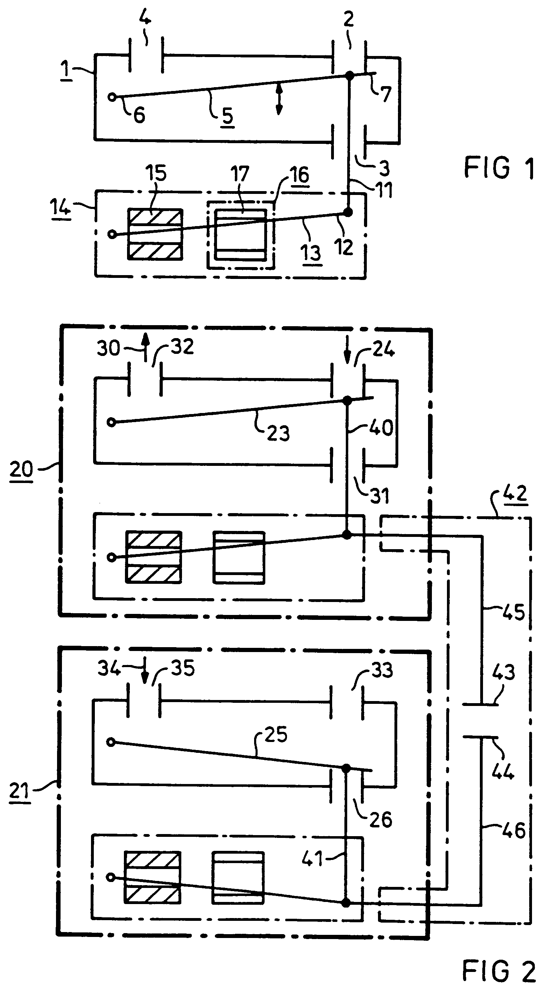

Das in Figur 1 dargestellte Servoventil weist ein Gehäuse 1 auf, das mit einer Zuluftöffnung 2, einer Entlüftungsöffnung 3 und einer Arbeitsöffnung 4 versehen ist; Zuluftöffnung 2 und Entlüftungsöffnung 3 liegen einander gegenüber. Innerhalb des Gehäuses 1 ist eine Ventilzunge 5 vorhanden, die mit ihrem einen Ende 6 mit dem Gehäuse 1 verbunden ist. Das andere freie Ende 7 der Ventilzunge 5 ist zwischen der Zuluftöffnung 2 und der Entlüftungsöffnung 3 hin und her bewegbar, so daß die Ventilzunge 5 die Zuluftöffnung 2 oder die Entlüftungsöffnung 3 verschließen kann.

Im Bereich des freien Endes 7 der Ventilzunge 5 ist eine Betätigungsstange 11 befestigt, mit der die Ventilzunge 5 ausgelenkt werden kann. Die Betätigungsstange 11 ist durch die Entlüftungsöffnung 3 aus dem Gehäuse 1 herausgeführt. Die Betätigungsstange 11 ist an einem Ende 12 eines Betätigungsorgans 13 eines elektromagnetischen Antriebs 14 angebracht, der außer dem Betätigungsorgan 13 eine Spule 15 und eine Halteeinrichtung 16 aufweist.

Das in der Figur 1 dargestellte Servoventil arbeitet im einzelnen in folgender Weise:

Fließt durch die Spule 15 des elektromagnetischen Antriebes 14 ein kurzer Stromimpuls, so wird das Betätigungsorgan (Magnetanker) 13 magnetisiert und durch einen Dauermagneten 17 in der Halteeinrichtung 16 ausgelenkt. Durch diese Auslenkung des Magnetankers 13 wird die Betätigungsstange 11 derart bewegt, daß die Ventilzunge 5 die Zuluftöffnung 2 verschließt. Wenn die Ventilzunge 5 ihre die Zuluftöffnung verschließende Lage erreicht hat, wird der Magnetanker 13 von dem Dauermagneten 17 in der Halteeinrichtung 16 arretiert, so daß kein weiterer Stromfluß durch die Spule erforderlich ist.

Fließt nun ein kurzer Stromimpuls umgekehrter Polarität durch die Spule 15, so wird der Magnetanker 13 entgegengesetzt magnetisiert und durch den Dauermagneten 17 in der Halteeinrichtung 16 derart ausgelenkt, daß nun die Ventilzunge 5 die Entlüftungsöffnung 3 verschließt. Durch den Dauermagneten 17 in der Halteeinrichtung 16 wird auch diese Stellung des Magnetankers 13 arretiert.

Die Funktionsweise des erfindungsgemäßen Servoventils entspricht der eines nicht überschneidungsfreien 3/2-Ventiles, da während des Schaltvorganges durch den elektromagnetischen Antrieb alle drei Öffnungen 2, 3 und 4 geöffnet sind.

In Figur 2 ist ein Steuerventil dargestellt, das zwei Servoventile 20 und 21 in einer Ausführung nach Figur 1 enthält. In der gezeigten Stellung der Servoventile verschließt die Ventilzunge 23 die Zuluftöffnung 24 des Servoventils 20 und die Ventilzunge 25 die Entlüftungsöffnung 26 des Servoventils 21.

Das Steuerventil kann zur Ansteuerung eines nicht dargestellten Hauptventils benutzt werden. Hierbei erfolgt die Zufuhr von Zuluft zu einem Eingang des Hauptventils in Richtung eines Pfeiles 30, indem über die Zuluftöffnung 24 des einen Servoventils 20 bei geschlossener Entlüftungsöffnung 31 Zuluft durch die Arbeitsöffnung 32 geführt wird. Die Steuerung der Abluft für das Hauptventil wird durch das andere Servoventil 21 in entsprechender Weise vorgenommen, indem bei geschlossener Zuluftöffnung 33 des anderen Servoventils 21 die Abluft in Richtung des Pfeiles 34 durch die Arbeitsöffnung 35 und die Entlüftungsöffnung 26 dieses Ventils gelenkt wird. Dabei kann die Zuluftöffnung 33 des anderen Servoventils 21 beispielsweise verschlossen oder mit Druckluft eines geeigneten Druckes beaufschlagt sein.

Die Betätigungsstangen 40 und 41 beider Servoventile 20 und 21 sind mit einer mechanischen Verriegelungseinrichtung 42 verbunden, die aus zwei Platten 43 und 44 und aus zwei Verriegelungsstangen 45 und 46 besteht. Durch die Auslenkung beispielsweise der Betätigungsstange 40 des Servoventils 20 wird die Verriegelungsstange 45 ebenfalls bewegt und dabei die Platte 43 gegen die Platte 44 der anderen Verriegelungsstange 46 geführt, wodurch die Betätigungsstange 41 des anderen Servoventils 21 arretiert wird. Wird hingegen anstelle der Betätigungsstange 40 die Betätigungsstange 41 des anderen Servoventils 21 ausgelenkt, so wird die Verriegelungsstange 46 bewegt und dabei die Platte 44 gegen die Platte 43 der Verriegelungsstange 45 geführt, wodurch die Betätigungsstange 40 des einen Servoventils 20 arretiert wird.

Durch die mechanische Verriegelung 42 wird sichergestellt, daß die Zuluftöffnung 24 des Servoventils 20 und die Entlüftungsöffnung 26 des Servoventils 21 nicht gleichzeitig geöffnet werden können.

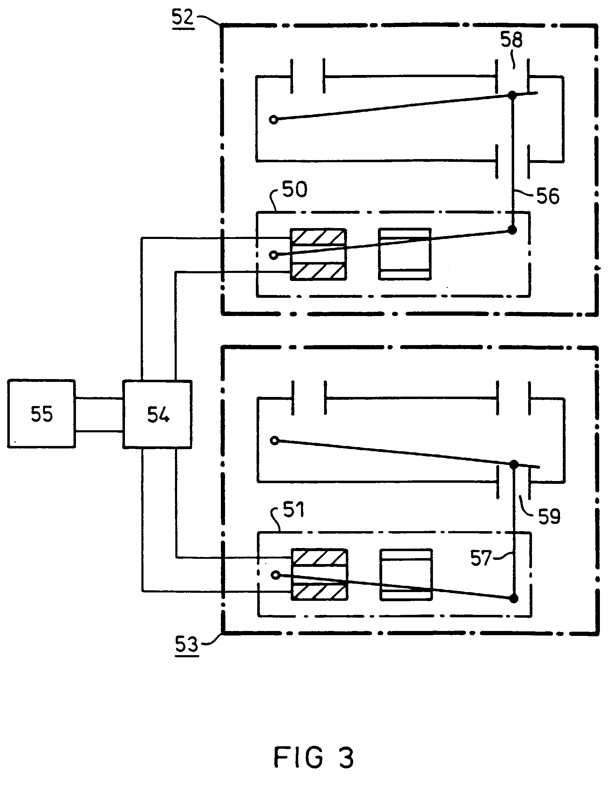

Bei dem Steuerventil nach Figur 3 sind die elektromagnetischen Antriebe 50 und 51 des einen Servoventils 52 und des anderen Servoventils 53 an eine elektrische Schaltung 54 angeschlossen. Diese steuert nach Einschalten der Stromversorgung 55 die elektromagnetischen Antriebe 50 und 51 und somit die Betätigungsstangen 56 und 57. Die Schaltung 54 gewährleistet, daß zu keinem Zeitpunkt die Zuluftöffnung 58 des Servoventils 52 und die Entlüftungsöffnung 59 des Servoventils 53 gleichzeitig geöffnet sind.

## Patentansprüche

1. Servoventil
- mit einem Gehäuse mit einer Zuluft-, einer Entlüftungs- und einer Arbeitsöffnung, wobei die Zuluft- (2) und die Entlüftungsöffnung (3) im Gehäuse (1) einander gegenüberliegen,
- mit einem Ventilorgan, das als Ventilzunge (5) ausgebildet ist, die an ihrem einen Ende (6) gehalten ist und durch einen elektromagnetischen Antrieb mit ihrem anderen Ende (7) zwischen einer die Zuluft- (2) und einer die Entlüftungsöffnung (3) verschließenden Lage hin- und herbewegbar ist,
**dadurch gekennzeichnet**, daß
- an dem anderen Ende (7) der Ventilzunge (5) eine Betätigungsstange (11) angreift, die durch die Entlüftungsöffnung (3) zu dem elektromagnetischen Antrieb (14) geführt ist, und daß
- der elektromagnetische Antrieb (14) eine Halteeinrichtung (16) aufweist, mittels der die Betätigungsstange (11) sowohl in der die Entlüftungsöffnung (3) verschließenden Lage der Ventilzunge (5) als auch in der die Zuluftöffnung (2) verschließenden Lage der Ventilzunge (5) arretierbar ist.

2. Servoventil nach Anspruch 1,
**dadurch gekennzeichnet**, daß
- die Halteeinrichtung (16) des elektromagnetischen Antriebs (14) einen Dauermagneten (17) aufweist, der mit dem Betätigungsorgan (13) des elektromagnetischen Antriebs zusammenwirkt.

3. Verwendung eines Servoventils nach Anspruch 1 oder 2,
**dadurch gekennzeichnet**, daß
- zwei Servoventile (20, 21) ein Steuerventil für ein Hauptventil bilden, das über die Zuluftöffnung (24) des einen Servoventils (20) Zuluft (30) erhält und über die Entlüftungsöffnung (26) des anderen Servoventils (21) entlüftbar ist, wozu die Betätigungsstangen (40, 41) der zwei Servoventile (20, 21) derart gesteuert sind, daß gleichzeitig entweder die Zuluftöffnung (24) des einen Servoventils (20) oder die Entlüftungsöffnung (26) des anderen Servoventils (21) geöffnet ist.

4. Verwendung eines Servoventils nach Anspruch 3,
**dadurch gekennzeichnet**, daß
- die Betätigungsstangen (40, 41) über eine mechanische Verriegelungseinrichtung (42) miteinander verbunden sind, durch die bei die Zuluftöffnung (24) des einen Servoventils (20) freigebender Lage der Betätigungsstange (40) dieses Servoventils (20) die Betätigungsstange (41) des anderen Servoventils (21) in der die Entlüftungsöffnung (26) dieses Ventils verschließenden Lage der Ventilzunge (25) arretiert ist und durch die bei die Entlüftungsöffnung (26) des anderen Servoventils (21) freigebender Lage der Betätigungsstange (41) dieses Servoventils (21) die Betätigungsstange (40) des einen Servoventils (20) in der die Zuluftöffnung (24) dieses Ventils verschließenden Lage der Ventilzunge (23) arretiert ist.

5. Verwendung eines Servoventils nach Anspruch 3,
**dadurch gekennzeichnet**, daß
- die elektromagnetischen Antriebe (50, 51) der zwei Servoventile (52, 53) an eine elektrische Schaltung (54) angeschlossen sind,
- die elektrische Schaltung (54) derart ausgebildet ist, daß sie nach Einschalten der Stromversorgung (55) die elektromagnetischen Antriebe (50, 51) zu einer derartigen Einstellung der Betätigungsstangen (56, 57) veranlaßt, daß die Zuluftöffnung (58) des einen Servoventils (52) geschlossen und gleichzeitig die Entlüftungsöffnung (59) des anderen Servoventils (53) geöffnet ist und daß sie bei nachfolgender äußerer Betätigung die elektromagnetischen Antriebe (50, 51) zu einer derartigen Einstellung der Betätigungsstangen (56, 57) veranlaßt, daß gleichzeitig entweder die Zuluftöffnung (58) des einen Servoventils (52) oder die Entlüftungsöffnung (59) des anderen Servoventils (53) geöffnet ist.
